# EUROPEAN PATENT APPLICATION

(11) **EP 4 462 871 A1**
(43) Date of publication of application: **13.11.2024**
(21) Application number: 24169157.5
(22) Date of filing: 09.04.2024
(51) Int. Cl.: H04W 36/00

(54) **CELL CHANGE IN CELLULAR COMMUNICATION NETWORKS**

(30) Priority: 11.05.2023 IN 202341033306
(71) Applicant: Nokia Technologies Oy, 02610 Espoo (FI)
(72) Inventor: JENA, Nihar Ranjan, Bangalore (IN); KARABULUT, Umur, Munich (DE); SELVAGANAPATHY, Srinivasan, Bangalore (IN); SAHU, Prasna Kumar, Bangalore (IN)
(74) Representative: Nokia EPO representatives

(57) **Abstract**

According to an example aspect of the present disclosure, there is provided a method comprising, receiving a reference configuration from a wireless network node, wherein the reference configuration is for an intra secondary node cell change and for an inter secondary node cell change, performing the intra secondary node cell change using the reference configuration and an intra secondary node cell change delta configuration and performing the inter secondary node cell change using the reference configuration and an inter secondary node cell change delta configuration.

## Description

### FIELD

Various example embodiments relate in general to cellular communication networks and more specifically, to cell changes in such networks.

### BACKGROUND

Mobility of wireless terminals, such as User Equipment, UEs, needs to be enabled in various wireless communication networks. For instance, mobility is very important in cellular communication networks as a UE may move from a coverage area of one cell to a coverage area of another cell. Cellular communication networks comprise at least networks operating according to Long Term Evolution, LTE, and/or 5G radio access technology. 5G radio access technology may also be referred to as New Radio, NR, access technology. Since its inception, LTE has been widely deployed and 3rd Generation Partnership Project, 3GPP, still develops LTE. Similarly, 3GPP also develops standards for 5G/NR. One of the topics in the 3GPP discussions is related to cell changes and there is a need to provide improved methods, apparatuses and computer programs related to cell changes.

### SUMMARY

According to some aspects, there is provided the subject-matter of the independent claims. Some example embodiments are defined in the dependent claims.

The scope of protection sought for various example embodiments of the disclosure is set out by the independent claims. The example embodiments and features, if any, described in this specification that do not fall under the scope of the independent claims are to be interpreted as examples useful for understanding various example embodiments of the disclosure.

According to a first aspect of the present disclosure, there is provided an apparatus comprising at least one processor and at least one memory storing instructions that, when executed by the at least one processor, cause the apparatus at least to receive a reference configuration from a wireless network node, wherein the reference configuration is for an intra secondary node cell change and for an inter secondary node cell change, perform the intra secondary node cell change using the reference configuration and an intra secondary node cell change delta configuration and perform the inter secondary node cell change using the reference configuration and an inter secondary node cell change delta configuration. The apparatus of the first aspect may be a user equipment, or a control device configured to control the functioning thereof, possibly when installed therein.

Example embodiments of the first aspect may comprise at least one feature from the following bulleted list or any combination of the following features:
- wherein the stored instructions further cause, when executed by the at least one processor, the apparatus at least to receive an indication from the wireless network node or another wireless network node, the indication indicating that the reference configuration is for the intra secondary node cell change and for the inter secondary node cell change;
- wherein the wireless network node is a source secondary node, wherein the reference configuration is for the intra secondary node cell change, and wherein the indication is received from said another wireless network node that is a master node, and the stored instructions further cause, when executed by the at least one processor, the apparatus at least to perform, on the basis of the indication, the inter secondary node cell change after performing the intra secondary node cell change and by using the reference configuration for the intra secondary node cell change;
- wherein the stored instructions further cause, when executed by the at least one processor, the apparatus at least to receive, from a master node, the inter secondary node cell change delta configuration and an indication indicating that the reference configuration is to be used for the inter secondary node cell change and perform the inter secondary node cell change using the reference configuration and the inter secondary node cell change delta configuration;
- wherein the stored instructions further cause, when executed by the at least one processor, the apparatus at least to receive, from a master node, an updated intra secondary node cell change delta configuration and an updated reference configuration and perform the inter secondary node cell change using the updated reference configuration and the inter secondary node cell change delta configuration;
- wherein the wireless network node is a master node, and wherein the reference configuration is for the inter secondary node cell change the stored instructions further cause, when executed by the at least one processor, the apparatus at least to receive, from the master node an indication indicating that the reference configuration is also for the intra secondary node cell change and perform, using the reference configuration on the basis of the indication, the intra secondary node cell change after performing the inter secondary node cell change;
- wherein the stored instructions further cause, when executed by the at least one processor, the apparatus at least to receive, from a source secondary node, the intra secondary node cell change delta configuration and an indication indicating that the reference configuration is to be used for the intra secondary node cell change and perform the intra secondary node cell change using the reference configuration and the intra secondary node cell change delta configuration;
- wherein the reference configuration comprises a part for the intra secondary node cell change and another part for the inter secondary node cell change.

According to a second aspect of the present disclosure, there is provided an apparatus comprising at least one processor and at least one memory storing instructions that, when executed by the at least one processor, cause the apparatus at least to determine a reference configuration for a user equipment, wherein the reference configuration is for an intra secondary node cell change and for an inter secondary cell change and transmit the reference configuration to the user equipment. The apparatus of the second aspect may be a wireless network node, like a source secondary node or a master node, or a control device configured to control the functioning thereof, possibly when installed therein.

Example embodiments of the second aspect may comprise at least one feature from the following bulleted list or any combination of the following features:
- wherein the stored instructions further cause, when executed by the at least one processor, the apparatus at least to transmit an indication to the user equipment, the indication indicating that the reference configuration is for the intra secondary node cell change and for the inter secondary node cell change;
- wherein the apparatus is a master node and the stored instructions further cause, when executed by the at least one processor, the apparatus at least to transmit, to the user equipment, the inter secondary node cell change delta configuration and an indication indicating that the reference configuration is to be used for the inter secondary node cell change and receive, from the user equipment, a radio resource control reconfiguration complete message associated with the inter secondary node cell change;
- wherein the apparatus is a master node and the stored instructions further cause, when executed by the at least one processor, the apparatus at least to receive, from a source secondary node, the reference configuration, determine to initiate the inter secondary node cell change and transmit the reference configuration to a target secondary node, wherein the target secondary node is a target node for the inter secondary node cell change;
- wherein the apparatus is a source secondary node and the stored instructions further cause, when executed by the at least one processor, the apparatus at least to transmit, to a master node, a request for the reference configuration and receive, after the request, the reference configuration from the master node;
- wherein the apparatus is a source secondary node and the stored instructions further cause, when executed by the at least one processor, the apparatus at least to prepare the reference configuration, transmit, to a master node, the reference configuration, receive, from the master node, a modified reference configuration, determine an updated reference configuration and an updated intra secondary node cell change delta configuration according to the modified reference configuration and transmit, to the master node, the updated intra secondary node cell change delta configuration and the updated reference configuration;
- wherein the apparatus is a master node and the stored instructions further cause, when executed by the at least one processor, the apparatus at least to receive, from a source secondary node, the reference configuration, transmit, to the source secondary node, a modified reference configuration, receive, from the source secondary node, an updated intra secondary node cell change delta configuration and an update reference configuration and transmit, to the user equipment, the updated intra secondary node cell change delta configuration and the updated reference configuration;
- wherein the apparatus is a source secondary node and the stored instructions further cause, when executed by the at least one processor, the apparatus at least to transmit, to the user equipment, the intra secondary node cell change delta configuration and an indication indicating that the reference configuration is to be used for the intra secondary node cell change and receive, from the user equipment, a radio resource control reconfiguration complete message associated with the intra secondary node cell change;
- wherein the reference configuration comprises a part for the intra secondary node cell change and another part for the inter secondary node cell change.

According to a third aspect of the present disclosure, there is provided an apparatus comprising means for receiving, by an apparatus, a reference configuration from a wireless network node, wherein the reference configuration is for an intra secondary node cell change and for an inter secondary node cell change, means for performing, by the apparatus, the intra secondary node cell change using the reference configuration and an intra secondary node cell change delta configuration and means for performing, by the apparatus, the inter secondary node cell change using the reference configuration and an inter secondary node cell change delta configuration. The apparatus of the third aspect may be a user equipment, or a control device configured to control the functioning thereof, possibly when installed therein.

According to a fourth aspect of the present disclosure, there is provided an apparatus comprising means for determining, by an apparatus, a reference configuration for a user equipment, wherein the reference configuration is for an intra secondary node cell change and for an inter secondary cell change and means for transmitting, by the apparatus, the reference configuration to the user equipment. The apparatus of the fourth aspect may be a wireless network node, like a source secondary node or a master node, or a control device configured to control the functioning thereof, possibly when installed therein.

According to a fifth aspect, there is provided a first method comprising receiving, by an apparatus, a reference configuration from a wireless network node, wherein the reference configuration is for an intra secondary node cell change and for an inter secondary node cell change, performing, by the apparatus, the intra secondary node cell change using the reference configuration and an intra secondary node cell change delta configuration and performing, by the apparatus, the inter secondary node cell change using the reference configuration and an inter secondary node cell change delta configuration. The apparatus of the fifth aspect may be a user equipment, or a control device configured to control the functioning thereof, possibly when installed therein.

In an embodiment of the first method, the method further comprises: receiving an indication from the wireless network node or another wireless network node, the indication indicating that the reference configuration is for the intra secondary node cell change and for the inter secondary node cell change.

In an embodiment of the first method, the wireless network node is a source secondary node, wherein the reference configuration is for the intra secondary node cell change, and wherein the indication is received from said another wireless network node that is a master node, and the method comprises: performing, on the basis of the indication, the inter secondary node cell change after performing the intra secondary node cell change and by using the reference configuration for the intra secondary node cell change.

In an embodiment of the first method, the method comprises: receiving, from a master node, the inter secondary node cell change delta configuration and an indication indicating that the reference configuration is to be used for the inter secondary node cell change; and performing the inter secondary node cell change using the reference configuration and the inter secondary node cell change delta configuration.

In an embodiment of the first method, the method comprises: receiving, from a master node, an updated intra secondary node cell change delta configuration and an updated reference configuration; and performing the inter secondary node cell change using the updated reference configuration and the inter secondary node cell change delta configuration.

In an embodiment of the first method, the wireless network node is a master node, and wherein the reference configuration is for the inter secondary node cell change, the method further comprising: receiving, from the master node an indication indicating that the reference configuration is also for the intra secondary node cell change; and performing, using the reference configuration on the basis of the indication, the intra secondary node cell change after performing the inter secondary node cell change.

In an embodiment of the first method, the method comprises: receiving, from a source secondary node, the intra secondary node cell change delta configuration and an indication indicating that the reference configuration is to be used for the intra secondary node cell change; and performing the intra secondary node cell change using the reference configuration and the intra secondary node cell change delta configuration.

In an embodiment of the first method, the reference configuration comprises a part for the intra secondary node cell change and another part for the inter secondary node cell change.

According to a sixth aspect, there is provided a second method comprising, determining, by an apparatus, a reference configuration for a user equipment, wherein the reference configuration is for an intra secondary node cell change and for an inter secondary cell change and transmitting, by the apparatus, the reference configuration to the user equipment. The apparatus of the sixth aspect may be a wireless network node, like a source secondary node or a master node, or a control device configured to control the functioning thereof, possibly when installed therein.

In an embodiment of the second method, the method further comprises: transmitting an indication to the user equipment, the indication indicating that the reference configuration is for the intra secondary node cell change and for the inter secondary node cell change.

In an embodiment of the second method, the apparatus is a master node and the method further comprises: transmitting, to the user equipment, the inter secondary node cell change delta configuration and an indication indicating that the reference configuration is to be used for the inter secondary node cell change; and receiving, from the user equipment, a radio resource control reconfiguration complete message associated with the inter secondary node cell change.

In an embodiment of the second method, the apparatus is a master node and the method further comprises: receiving, from a source secondary node, the reference configuration; determining to initiate the inter secondary node cell change; and transmitting the reference configuration to a target secondary node, wherein the target secondary node is a target node for the inter secondary node cell change.

In an embodiment of the second method, the apparatus is a source secondary node and the method further comprises: transmitting, to a master node, a request for the reference configuration; and receiving, after the request, the reference configuration from the master node.

In an embodiment of the second method, the apparatus is a source secondary node and the method further comprises: preparing the reference configuration; transmitting, to a master node, the reference configuration; receiving, from the master node, a modified reference configuration; determining an updated reference configuration and an updated intra secondary node cell change delta configuration according to the modified reference configuration; and transmitting, to the master node, the updated intra secondary node cell change delta configuration and the updated reference configuration.

In an embodiment of the second method, the apparatus is a master node and the method further comprises: receiving, from a source secondary node, the reference configuration; transmitting, to the source secondary node, a modified reference configuration; receiving, from the source secondary node, an updated intra secondary node cell changing delta configuration and an update reference configuration; and transmitting, to the user equipment, the updated intra secondary node cell change delta configuration and the updated reference configuration.

In an embodiment of the second method, the apparatus is a source secondary node and the method further comprises: transmitting, to the user equipment, the intra secondary node cell change delta configuration and an indication indicating that the reference configuration is to be used for the intra secondary node cell change; and receiving, from the user equipment, a radio resource control reconfiguration complete message associated with the intra secondary node cell change.

In an embodiment of the second method, the reference configuration comprises a part for the intra secondary node cell change and another part for the inter secondary node cell change.

According to a seventh aspect of the present disclosure, there is provided a non-transitory computer readable medium having stored thereon a set of computer readable instructions that, when executed by at least one processor, cause an apparatus to at least to perform the first method. According to an eighth aspect of the present disclosure, there is provided a non-transitory computer readable medium having stored thereon a set of computer readable instructions that, when executed by at least one processor, cause an apparatus to at least to perform the second method.

According to a ninth aspect of the present disclosure, there is provided a computer program comprising instructions which, when the program is executed by an apparatus, cause the apparatus to carry out the first method. According to a tenth aspect of the present disclosure, there is provided a computer program comprising instructions which, when the program is executed by an apparatus, cause the apparatus to carry out the second method.

### BRIEF DESCRIPTION OF THE DRAWINGS

FIG. 1 illustrates an example of a network scenario in accordance with at least some example embodiments;
FIG. 2 illustrates a first signalling example in accordance with at least some example embodiments;
FIG. 3 illustrates a second signalling example in accordance with at least some example embodiments;
FIG. 4 illustrates a third signalling example in accordance with at least some example embodiments;
FIG. 5 illustrates a fourth signalling example in accordance with at least some example embodiments;
FIG. 6 illustrates a fifth signalling example in accordance with at least some example embodiments;
FIG. 7 illustrates an example apparatus capable of supporting at least some example embodiments;
FIG. 8 illustrates a flow graph of a first method in accordance with at least some example embodiments.

### DETAILED DESCRIPTION

Cell changes in cellular communication networks may be enhanced by the procedures described herein. More specifically, cell changes in cellular communication networks may be enhanced by providing a single reference configuration for an intra Secondary Node, SN, cell change and an inter SN cell change. The same reference configuration may be used by a User Equipment, UE, for both cell changes. The UE may then perform the cell changes using the reference configuration along with an intra SN cell change delta configuration and an inter SN cell change delta configuration. Hence, less signalling is needed compared to providing full configurations for both types of cell changes.

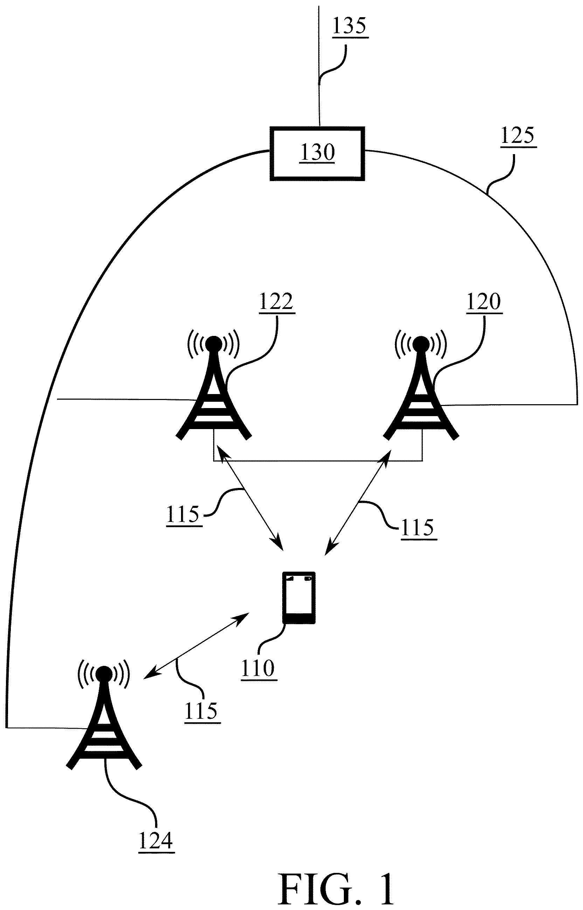

FIG. 1 illustrates an example of a network scenario in accordance with at least some example embodiments. According to the example scenario of FIG. 1, there may be a cellular communication system, which comprises UE 110, Master Node, MN, 120, Source-SN, S-SN, 122, Target-SN, T-SN, and core network element 130. UE 110 may be connected to MN 120 and S-SN 122 via air interface 115 before an SN change. After an intra SN cell change, UE 110 may still be connected to MN 120 and S-SN 122 via air interface 115, but to a different cell of S-SN 122 than before the SN cell change. In case of an inter SN cell change, UE 110 may be connected to MN 120 and T-SN 124 via air interface 115 after the SN cell change. In some example embodiments, air interface 115 may be a beam-based air interface.

UE 110 may comprise, for example, a smartphone, a cellular phone, a Machine-to-Machine, M2M, node, Machine-Type Communications, MTC, node, an Internet of Things, IoT, node, a car telemetry unit, a laptop computer, a tablet computer or, indeed, any kind of suitable wireless terminal. Air interface 115 between UE 110 and wireless network nodes 120, 122, 124 may be configured in accordance with a Radio Access Technology, RAT, which both UE 110 and network nodes 120, 122, 124 are configured to support. Examples of cellular RATs include Long Term Evolution, LTE, New Radio, NR, which may also be known as fifth generation, 5G, radio access technology, 6G, and MulteFire. For instance, UE 110 and wireless network nodes 120, 122, 124 may be configured to operate according to at least one 3rd Generation Partnership Project, 3GPP, standard.

For example in the context of LTE, wireless network nodes 120, 122, 124 may be referred to as eNBs while wireless network nodes 120, 122 and 124 may be referred to as gNBs in the context of NR. Wireless network nodes 120, 122, 124 may, in general, be referred to as base stations, base station nodes or radio access nodes.

Wireless network nodes 120, 122, 124 may be connected, directly or via at least one intermediate node, with core network 130 via interface 125. Core network 130 may be, in turn, coupled via interface 135 with another network (not shown in FIG. 1), via which connectivity to further networks may be obtained, for example via a worldwide interconnection network. Wireless network nodes 120, 122, 124 may be connected with each other directly via an inter-BS interface, e.g., using an Xn interface or an X2 interface. In some example embodiments, the direct inter-BS interface may be absent though. In such a case, wireless network nodes 120, 122, 124 may communicate with each other via interface 125 and core network 130.

In some example embodiments, UE 110 may be initially connected to a cell of S-SN 122, e.g. to a Primary Secondary Cell, PSCell, provided by S-SN 112. Concerning cell changes, for example in case of a Conditional PSCell Change, CPC, if UE 110 is configured for the CPC, UE 110 may have to release CPC configurations when completing a random access procedure towards a target PSCell, like a cell of T-SN 124. If UE 110 would not have a chance to perform a subsequent CPC without prior CPC reconfiguration and re-initialization from the network, such as MN 120 or S-SN 122, the delay would be increased for the cell change along with the signalling overhead. Such issues may be particularly important in the case of frequent Secondary Cell Group, SCG, changes when operating on Frequency Range 2, FR2. Therefore, for example in case of Multi-RAT - Dual Connectivity, MR-DC, with selective activation of cell groups, it would be important to enable subsequent CPC, after the SCG change, without reconfiguration and re-initialization of the CPC preparation from the network. That is, it would be desirable to reduce the signalling overhead and interruption time for SCG changes.

In some example embodiments, a delta configuration is therefore provided for selective activation to minimize the signalling overhead. The delta configuration may be a configuration that is combined with another configuration, like a reference configuration, to achieve a full configuration. If the reference configuration would be a configuration of a source cell group configuration, such as Master Cell Group, MCG, for a PCell change or a SCG for PSCell change, the delta configuration would be generated with respect to a source SCG. In such a case, the delta configuration would be applied on the configuration of the source SCG and the final configuration generated using the configuration of the source SCG together with the delta configuration would result in the desired configuration. However, in case of selective activation, the configuration of the source SCG would change after each subsequent cell change. Hence, applying the delta configuration on the source SCG would result in a different final configuration. Therefore, there is a need to provide a reference configuration for delta configurations, the reference configuration being such that when it is applied with the delta configuration, the combination would lead to a consistent final configuration.

Without coordination between MN 120 and S-SN 122, at least in case of coexistence of SN-Intra-SN Selective Activation of PSCell Change, SAPC, and MN initiated Inter-SN SAPC, both MN 120 and S-SN 122 would need to generate their own reference configurations. In such a case, the reference configurations would not be usable for both cases, as MN 120 and S-SN 122 would not be aware of the reference configurations of each other. This is because Intra-SN SAPC and Inter-SN SAPC configurations would be done independently and over different signalling radio bearers, for example via Signaling Radio Bearer 3, SRB3 for the Intra-SN SAPC and SRB1 for the Inter-SN SAPC. In that case, both MN 120 and S-SN 122 would need to provide their own reference configurations to UE 110 which means that UE 110 would need to handle multiple reference configurations. However, such an approach would lead to more overhead in the signalling between UE 110 and the network, as UE 110 would receive different reference configurations. In addition, a mechanism would be need on the side of UE 110 to handle multiple reference configurations. Handling of multiple reference configurations during SAPC with subsequent cell changes might further be a complex operation that UE 110 would need to cope with. So without further enhancements, a full configuration would need to be provided to UE 110 by both, MN 120 and S-SN 112, thereby causing additional signaling over air interface 115. For example, if Radio Resource Control, RRC, signalling would be used, the size of the RRC reconfiguration would be increased.

At least some example embodiments of the present disclosure therefore provide a solution for a single reference configuration to be used for both, an intra SN cell change and inter SN cell change. In some example embodiments, the use of the single reference configuration may be enabled by coordination between MN 120 and S-SN 122. After receiving the reference configuration for the intra SN cell change and inter SN cell change, UE 110 may perform the intra secondary cell change using the reference configuration and an intra SN cell change delta configuration. UE 110 may also perform the inter SN cell change using the same reference configuration and an inter SN cell change delta configuration. The intra SN cell change may be performed first and the inter SN cell change after that, or vice versa.

For example, if the intra SN cell change is performed first and the inter SN cell change after that, e.g., an intra-SN SAPC followed by an inter-SN SAPC, the same reference configuration may be used for both cell changes. In some example embodiments, S-SN 122 may share the reference configuration with MN 120 after transmitting the reference configuration to UE 110, possibly over SRB3. In some example embodiments, S-SN 122 may request the reference configuration from MN 120 for the intra SN cell change, before transmitting the reference configuration to UE 110, possibly over SRB3. In some example embodiments, the reference configuration may be updated by MN 120, for example during the inter SN cell change.

Alternatively, if the inter SN cell change is performed first and the intra SN cell change after that, e.g., an inter-SN SAPC followed by intra-SN SAPC, MN 120 may transmit the reference configuration to S-SN 122 for the inter SN cell change, after transmitting the reference configuration to UE 110, possibly over SRB1.

In some example embodiments, multiple reference configurations may be provided. For example, two reference configurations may be provided to UE 110 and maintained by UE 110. Said two reference configurations may comprise one reference configuration for the intra SN cell change, e.g., for Intra-SN selective activation, and another reference configuration for the inter SN cell change, e.g., for inter-SN selective activation. Said two reference configurations may be referred to as parts of one reference configuration. As a consequence, the two reference configurations may complement one another to provide said one reference configuration for both Inter-SN SAPC and Intra-SN SAPC. For example, MN 120 may provide a part that defines a configuration for a MCG, while S-SN 122 may provide a part that defines a configuration for a SCG.

The reference configuration may hence comprise one part for the intra SN cell change and another part for the inter SN cell change. For example, the reference configuration for intra-SN selective activation may comprise MCG and SCG configurations and the reference configuration for inter-SN selective activation may also comprise MCG and SCG parts. For switching between Inter and Intra-SN candidate cells in this scenario, S-SN 122 may also include one configuration in the reference configuration of the intra-SN selective activation, wherein said one configuration comprises the initial MCG and reference SCG configuration used for intra-SN as additional candidate configuration. Then, when the intra-SN SAPC is executed, UE 110 may first switch to this interim configuration and then apply the target SCG configuration. Hence, less overhead is caused compared to full configuration.

The reference configuration may comprise a set of parameters that have same values across the candidate configurations, such as common-configuration of serving-cell channels and feature activation related parameters. A delta configuration may be a cell-specific configuration, such as UE specific channel parameters and radio-bearer configurations depending on admission control at each target-cell.

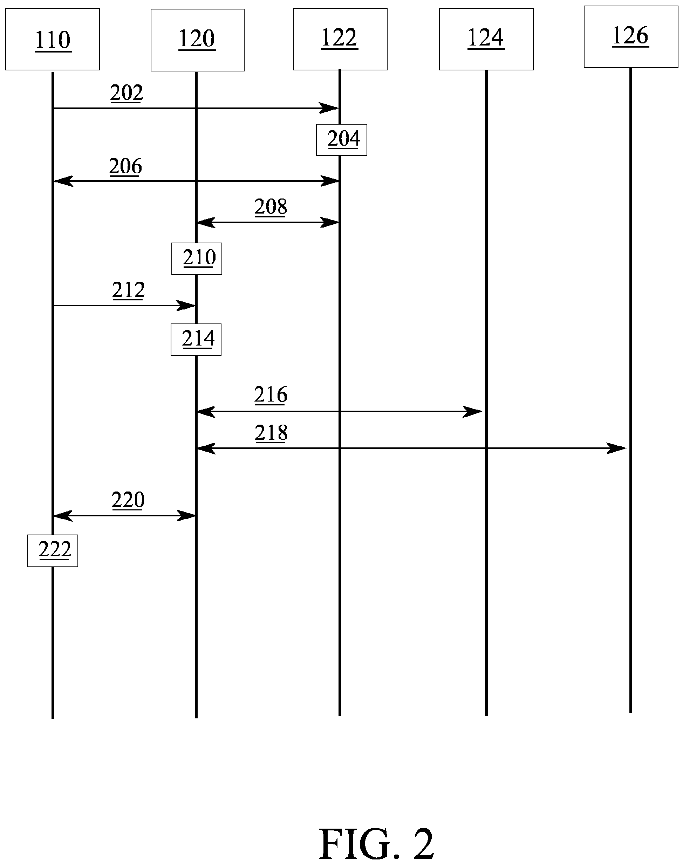

FIG. 2 illustrates a first signalling example in accordance with at least some example embodiments. On the vertical axes are disposed, from the left to the right, UE 110, MN 120, S-SN 122, T-SN 124 and other T-SNs 126. Time advances from the top towards the bottom. FIG. 2 illustrates an example, wherein S-SN 122 may determine and prepare the reference configuration for both, the intra SN cell change and for the inter SN cell change. For example, S-SN 122 may determine the reference configuration as a part of an intra-SN SAPC and then transmit the reference configuration to MN 120 for further use in an inter-SN SAPC.

At step 202, UE 110 may transmit a measurement report to S-SN 122, possibly over SRB3, to trigger the intra SN cell change, such as preparation of the intra-SN SAPC. At step 204, S-SN 122 may initiate the intra SN cell change based on the received measurement report. S-SN 122 may also prepare the reference configuration for the intra SN cell change. The reference configuration may be usable for the inter SN cell change in the future as well.

At step 206, S-SN 122 may transmit the reference configuration to UE 110, for example in an RRC reconfiguration message over SRB3. S-SN 122 may also transmit an intra SN cell change delta configuration to UE 110. In some example embodiments, S-SN 122 may also transmit an indication indicating that the reference configuration is for the intra SN cell change and for the inter SN cell change. For example, the indication may indicate that the same reference configuration may be used for inter-SN SAPC as well. UE 110 may perform the intra SN cell change using the reference configuration and the intra SN cell change delta configuration After reconfiguring accordingly, UE 110 may respond by transmitting a confirmation, such as an RRC reconfiguration complete message associated with the intra SN cell change over SRB3.

At step 208, S-SN 122 may transmit the reference configuration to MN 120. For example, S-SN 122 may transmit an SN modification required message to MN 120. In some example embodiments, S-SN 120 may indicate that S-SN 122 configured UE 110 with the reference configuration for cell changes, such as SAPCs. MN 120 may confirm reception, for example by transmitting an SN modification message to S-SN 122. MN 120 may thus acknowledge that UE 110 has already received the reference configuration from S-SN 122. At step 210, MN 120 may store the reference configuration provided by S-SN 122 for further use, for example for the inter SN cell change, like the inter-SN SAPC.

At step 212, UE 110 may transmit a measurement report to MN 120. At step 214, MN 120 may determine to initiate, based on the received measurement report, the inter SN cell change. At steps 216 and 218, MN 120 may initiate the inter SN change for candidate cells, such as cells of T-SN 124 and other T-SNs 126. For example, MN 120 may transmit an SN addition request to candidate cells with the reference configuration configured earlier, which was received from S-SN 122. That is, MN 120 may transmit, e.g., to T-SN 124, the reference configuration, wherein T-SN 124 is a target node for the inter SN cell change. MN 120 may also indicate that the reference configuration was generated by S-SN 122 and that the reference configuration may be used for the inter SN cell change.

Each of T-SN 124 and other T-SNs 126 may respond to MN 120, for example by transmitting an SN addition request acknowledge message, possibly with an inter SN cell change delta configuration referring to the reference configuration. Each of T-SN 124 and other T-SNs 126 may determine the inter SN cell change delta configuration independently and transmit it to MN 120. Each of T-SN 124 and other T-SNs 126 may hence have a different inter SN cell change delta configuration.

At step 220, MN 120 may transmit the inter SN cell change delta configuration of the selected target SN, like T-SN 124, to UE 110. For example, MN 120 may transmit an RRC reconfiguration message to UE 110, the RRC reconfiguration message comprising the inter SN cell change delta configuration of a target candidate PSCell. However, MN 120 might not transmit the reference configuration. Instead, MN 120 may transmit an indication indicating that the reference configuration, which was provided by S-SN 122 during the intra SN cell change, is to be used for the inter SN cell change. The indication may be a flag, for example. At step 220, UE 110 may also respond by transmitting an RRC reconfiguration complete message associated with the inter SN cell change.

At step 222, UE 110 may perform the inter SN cell change using the reference configuration and the inter SN cell change delta configuration. For example, UE 110 may perform the inter SN cell change when an execution condition is satisfied. UE 110 may apply the inter SN cell change delta configuration, received from MN 120, for the inter SN cell change by referring to the reference configuration received from S-SN 122, at step 206. For example, when the execution condition is satisfied for inter-SN SAPC preparations initiated by MN 120, UE 110 may apply the inter SN cell change delta configuration received from MN 120 for an inter-SN SAPC by referring to reference configuration communicated by S-SN 122 during an intra-SN SAPC.

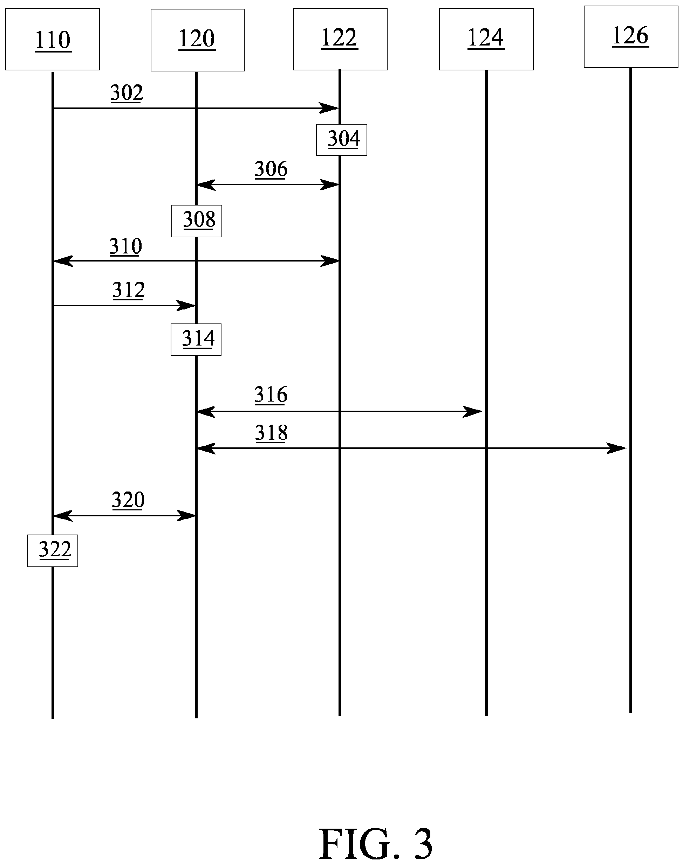

FIG. 3 illustrates a second signalling example in accordance with at least some example embodiments. As in FIG. 2, on the vertical axes are disposed, from the left to the right, UE 110, MN 120, S-SN 122, T-SN 124 and other T-SNs 126. Time advances from the top towards the bottom. In the example of FIG. 3, S-SN 122 may request MN 120 to provide the reference configuration to be used for the intra SN cell change, such as an intra-SN SAPC. MN 120 may then prepare and transmit the reference configuration to S-SN 122. MN 120 may also store the reference configuration for further use, i.e., for the inter SN cell change, like future inter-SN SAPC.

Steps 302 and 304 in FIG. 3 may correspond to steps 202 and 204 in FIG. 2, respectively. At step 306, S-SN may transmit to MN 120 a request for the reference configuration, e.g., in an SN modification required message. S-SN 122 may for example indicate that it requests the reference configuration that will be used for intra-SN SAPC preparation. MN 120 may generate the reference configuration and transmit the reference configuration to S-SN 122, e.g., in an SN modification confirm message, to be used by S-SN 122 for the intra SN cell change, like intra-SN SAPC preparations. MN 120 may also indicate that the reference configuration has not been provided to UE 110 before and the reference configuration should be provided to UE 110 by S-SN 122 along with the intra SN cell change delta configuration, e.g., for the intra-SN SAPC preparations. At step 308, MN 120 may store the reference configuration.

At step 310, S-SN 122 may transmit the reference configuration and the intra SN cell change reference configuration to UE 110. For example, S-SN 122 may transmit an RRC reconfiguration message over SRB3. In some example embodiments, S-SN 122 may indicate that the reference configuration was generated by MN 120. Alternatively, or in addition, S-SN 122 may indicate that UE 110 should use the reference configuration for both, the inter SN cell change initiated by MN 120 and intra SN cell change initiated by S-SN 122. UE 110 may perform the intra SN cell change using the reference configuration and the intra SN cell change delta configuration.

Steps 312 - 322 in FIG. 3 may correspond to steps 212 - 222 in FIG. 2 otherwise, but at steps 316 and 318 MN 120 may indicate that the configuration was generated by MN 120 and provided to UE 110 via S-SN 122.

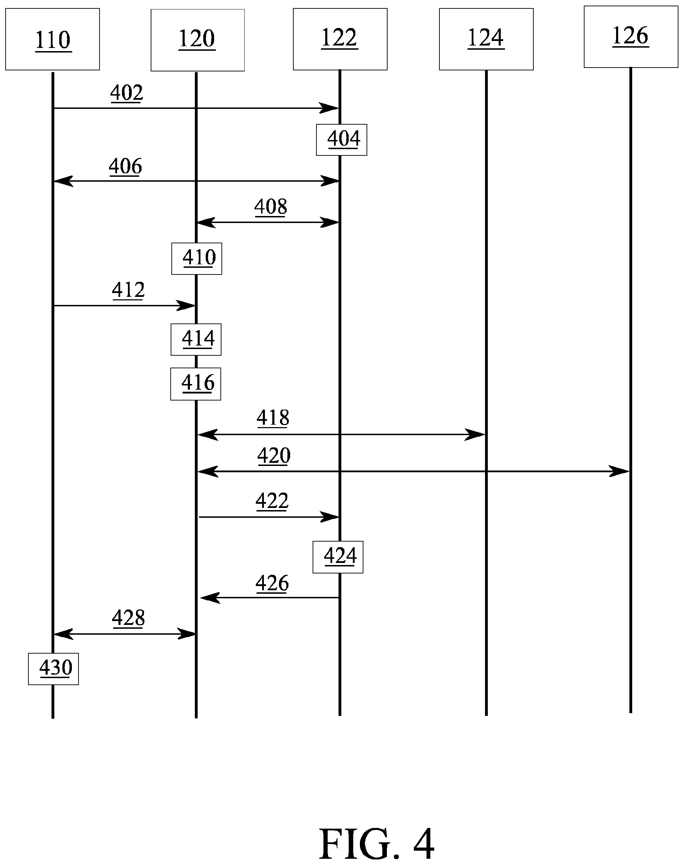

FIG. 4 illustrates a third signalling example in accordance with at least some example embodiments. As in FIGs. 2 and 3, on the vertical axes are disposed, from the left to the right, UE 110, MN 120, S-SN 122, T-SN 124 and other T-SNs 126. Time advances from the top towards the bottom. In the example of FIG. 4, MN 120 may modify the reference configuration and the modified reference configuration may be shared with S-SN 122 during the inter SN cell change. MN 120 may transmit the modified reference configuration to S-SN 122 and S-SN 122 may respond by transmitting an updated reference configuration along with an updated intra SN cell change delta configuration to MN 120 for the intra SN cell change, like intra-SN SAPC, referring to the updated reference configuration.

Steps 402 - 414 in FIG. 4 may correspond to steps 202 - 214 in FIG. 2, respectively. At step 416, MN 120 may modify the reference configuration stored at step 410. At steps 418 and 420, MN 120 may transmit the modified reference configuration to T-SN 124 and other T-SNs 126, possibly in an SN addition request message. Each of T-SN 124 and other T-SNs 126 may respond by transmitting an inter SN cell change delta configuration, possibly in an SN addition request acknowledge message.

At step 422, MN 120 may transmit the modified reference configuration to S-SN 122, possibly in an SN modification request message. At step 424, S-SN 122 may determine an updated intra SN cell change delta configuration according to the modified reference configuration for the intra SN cell change, such as intra-SN SAPC. Also, S-SN 122 may update the reference configuration according to the modified reference configuration. At step 426, S-SN 122 may transmit to MN 120 the updated reference configuration and the updated intra SN cell change delta configuration. For example, S-SN 122 may respond by transmitting an SN modification request acknowledgement with the updated delta configuration for intra-SN SAPC by referring to the updated reference configuration.

At step 428, MN 120 may transmit to UE 110 the updated intra SN cell change delta configuration and the updated reference configuration. In some example embodiments, MN 120 may transmit to UE 110 an indication indicating that UE 110 is to continue with the intra SN cell change. For example, MN 120 may transmit a flag "Continue Intra-SN-SAPC.UE 110 may respond by transmitting an RRC reconfiguration complete message associated with the intra SN cell change. In some example embodiments, MN 120 may transmit the delta configuration as received from target candidate SNs, possibly in an RRC reconfiguration message.

At step 430, UE 110 may then perform the intra SN cell change using the updated reference configuration and the intra SN cell change delta configuration. In some example embodiments, when execution condition is satisfied, UE 110 may apply the delta configuration received from MN 120 for inter-SN SAPC by referring to the updated reference configuration. UE 110 may also apply the updated delta configuration received from S-SN 122 via MN 120 for an intra-SN SAPC by referring to the updated reference configuration.

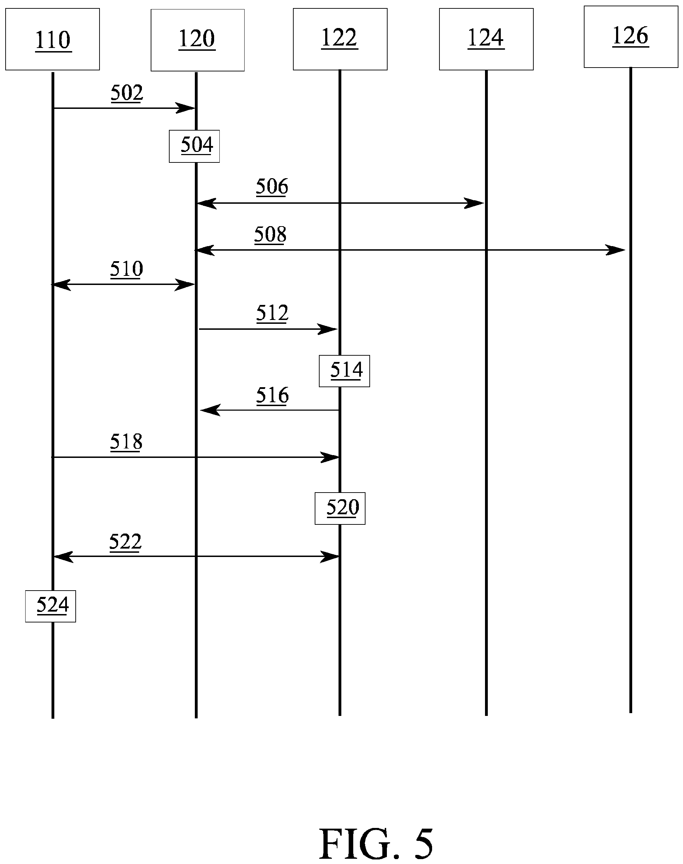

FIG. 5 illustrates a fourth signalling example in accordance with at least some example embodiments. As in FIGs. 2 - 4, on the vertical axes are disposed, from the left to the right, UE 110, MN 120, S-SN 122, T-SN 124 and other T-SNs 126. Time advances from the top towards the bottom. In the example of FIG. 5, an inter SN cell change, such as inter-SN SAPC, may be followed by an intra SN cell change, such as intra-SN SAPC. MN 120 may prepare, during the inter-SN cell change, the reference configuration and transmit the reference configuration to S-SN 122 to be used in case of the intra SN cell change.

At step 502, UE 110 may transmit a measurement report to MN 120. MN 120 may then initiate the inter SN cell change based on the received measurement report. At step 504, MN 120 may prepare the reference configuration. At steps 506 and 508, MN 120 may transmit the reference configuration to T-SN 124 and other T-SNs 126, possibly in an SN addition request message.

Each of T-SN 124 and other T-SNs 126 may respond by transmitting an inter SN cell change delta configuration referring to the reference configuration, possibly in an SN addition request acknowledge message. At step 510, MN 120 may transmit the reference configuration and the inter SN cell change delta configuration to UE 110. For example, MN 120 may transmit an RRC reconfiguration message comprising the inter SN cell change delta configuration received from a target candidate PSCell. In some example embodiments, MN 120 may transmit an indication indicating to use the same reference configuration for the intra SN cell change, such as the intra-SN SAPC. UE 110 may respond by transmitting an RRC reconfiguration complete message.

At step 512, MN 120 may transmit the reference configuration to S-SN 122, possibly in an SN modification request message. At step 514, SN 122 may store the reference configuration. At step 516, S-SN 122 may transmit an SN modification request acknowledgement message to MN 120.

At step 518, UE 110 may transmit a measurement report to S-SN 122, for example over SRB3. At step 520, S-SN 122 may initiate the intra SN cell change, such as the intra-SN SAPC, based on the received measurement report.

At step 522, S-SN 122 may transmit the intra SN cell change delta configuration to UE 110. For example, S-SN 122 may transmit an RRC reconfiguration message over SRB3 with the delta configuration for intra-SN SAPC. S-SN 122 might not share the reference configuration though. In some example embodiments, S-SN 122 may indicate ("Continue Inter-SN-SAPC"). Alternatively, or in addition, S-SN 122 may indicate to use the reference configuration received from MN 120 at step 510. UE 110 may respond by transmitting an RRC reconfiguration complete message associated with the intra SN cell change, possibly over SRB3.

UE 110 may thus perform the intra SN cell change after performing the inter SN cell change. UE 110 may receive, from S-SN 122, the intra SN cell change delta configuration and an indication indicating that the reference configuration is to be used for the intra SN cell change. UE 110 may then perform the intra SN cell change using the reference configuration and the intra SN cell change delta configuration.

For example, when execution condition is satisfied, UE 110 may apply the delta configuration received from S-SN 122 for Intra-SN SAPC by referring to the reference configuration communicated by MN 120 earlier, during an inter-SN SAPC.

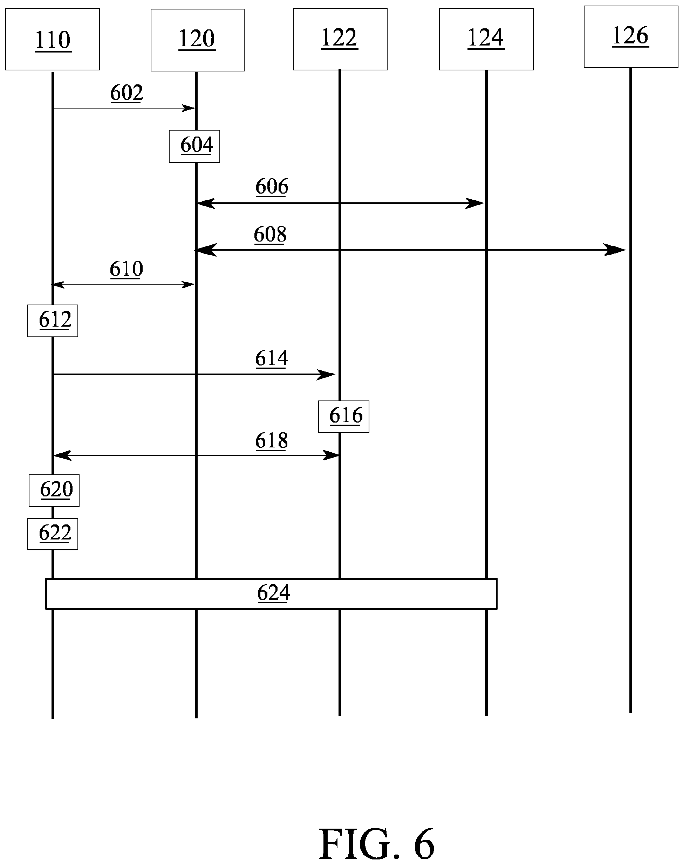

FIG. 6 illustrates a fifth signalling example in accordance with at least some example embodiments. As in FIGs. 2 - 5, on the vertical axes are disposed, from the left to the right, UE 110, MN 120, S-SN 122, T-SN 124 and other T-SNs 126. In the example of FIG. 6, multiple reference configurations may be maintained at UE 110. Said multiple reference configurations may comprise two reference configurations, one for an intra-SN cell change, such as an intra-SN SAPC, and another for an inter SN cell change, such as an inter-SN SAPC. If an execution condition of one target candidate cell is satisfied, UE 110 may use the corresponding reference configuration and delta configuration to derive the configuration to be applied.

Steps 602 - 610 in FIG. 6 may correspond to steps 502 - 510 in FIG. 5. At step 612, UE 110 may tag the reference configuration to be used for the inter SN cell change, i.e., tag the reference configuration to SRB1. At step 614, UE 110 may transmit a measurement report to S-SN 122, possibly over SRB3. At step 616, S-SN 122 may initiate the intra SN cell change based on the received measurement report. At step 618, S-SN may transmit the reference configuration along with an intra SN cell change delta configuration to UE 110. For example, S-SN 122 may transmit an RRC reconfiguration over SRB3 with the reference configuration and the delta configuration for intra-SN SAPC. The reference configuration may comprise an initial MCG configuration. The initial MCG configuration may be used by UE 110 after UE 110 has executed a SAPC configuration that modifies the MCG configuration. UE 110 may respond by transmitting an RRC reconfiguration complete message.

At step 620, UE 110 may tag the reference configuration to be used for the intra SN cell change. That is, UE 110 may tag the reference configuration to SRB3, i.e., to be used for the candidates for Intra-SN SAPC. The reference configuration may hence comprise two parts, one for the intra SN cell change and another for the inter SN cell change.

At step 622, when the execution condition is met for a candidate cell, UE 110 may choose the corresponding tagged reference configuration along with the delta configuration against the PScell and construct the configuration to be applied.

At step 624, if S-SN 122 is changed, the old SRB3-reference configuration may be removed and a new SRB3-reference configuration may be added from a new SN.

In some example embodiments, if UE 110 executes the inter-SN SAPC configuration after step 618, the MCG configuration of UE 110 may be modified as inter-SN SAPC requires MCG configuration modification. Then, if UE 110 executes one of the previous intra-SN SAPC configuration, UE 110 may apply the MCG configuration that is comprised in the intra-SN SAPC reference configuration first (from step 618), so that UE 110 may switch back to the initial MCG configuration. In other case, if UE 110 executes the intra-SN SAPC first, UE 110 might not apply the initial MCG configuration that is comprised in the reference configuration. This is because the initial MCG configuration (from step 618) and the current MCG configuration of UE 110 may be the same configurations and hence, reconfiguration of the MCG configurations would not be required at that time.

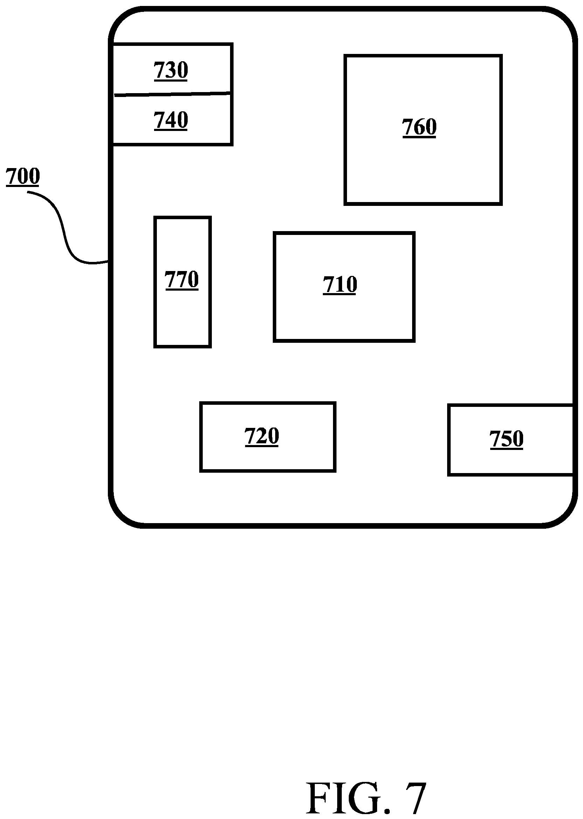

FIG. 7 illustrates an example apparatus capable of supporting at least some example embodiments. Illustrated is device 700, which may comprise, for example, UE 110 or wireless network node, such as MN 120 or S-SN 122, or a control device configured to control the functioning thereof, possibly when installed therein. Comprised in device 700 is processor 710, which may comprise, for example, a single- or multi-core processor wherein a single-core processor comprises one processing core and a multi-core processor comprises more than one processing core. Processor 710 may comprise, in general, a control device. Processor 710 may comprise more than one processor. Processor 710 may be a control device. A processing core may comprise, for example, a Cortex-A8 processing core manufactured by ARM Holdings or a Steamroller processing core produced by Advanced Micro Devices Corporation. Processor 710 may comprise at least one Qualcomm Snapdragon and/or Intel Atom processor. Processor 710 may comprise at least one application-specific integrated circuit, ASIC. Processor 710 may comprise at least one field-programmable gate array, FPGA. Processor 710 may be means for performing method steps in device 700. Processor 710 may be configured, at least in part by computer instructions, to perform actions.

A processor may comprise circuitry, or be constituted as circuitry or circuitries, the circuitry or circuitries being configured to perform phases of methods in accordance with example embodiments described herein. As used in this application, the term "circuitry" may refer to one or more or all of the following: (a) hardware-only circuit implementations, such as implementations in only analog and/or digital circuitry, and (b) combinations of hardware circuits and software, such as, as applicable: (i) a combination of analog and/or digital hardware circuit(s) with software/firmware and (ii) any portions of hardware processor(s) with software (including digital signal processor(s)), software, and memory(ies) that work together to cause an apparatus, such as a mobile phone or server, to perform various functions) and (c) hardware circuit(s) and or processor(s), such as a microprocessor(s) or a portion of a microprocessor(s), that requires software (e.g., firmware) for operation, but the software may not be present when it is not needed for operation.

This definition of circuitry applies to all uses of this term in this application, including in any claims. As a further example, as used in this application, the term circuitry also covers an implementation of merely a hardware circuit or processor (or multiple processors) or portion of a hardware circuit or processor and its (or their) accompanying software and/or firmware. The term circuitry also covers, for example and if applicable to the particular claim element, a baseband integrated circuit or processor integrated circuit for a mobile device or a similar integrated circuit in server, a cellular network device, or other computing or network device.

Device 700 may comprise memory 720. Memory 720 may comprise random-access memory and/or permanent memory. Memory 720 may comprise at least one RAM chip. Memory 720 may comprise solid-state, magnetic, optical and/or holographic memory, for example. Memory 720 may be at least in part accessible to processor 710. Memory 720 may be at least in part comprised in processor 710. Memory 720 may be means for storing information. Memory 720 may comprise computer instructions that processor 710 is configured to execute. When computer instructions configured to cause processor 710 to perform certain actions are stored in memory 720, and device 700 overall is configured to run under the direction of processor 710 using computer instructions from memory 720, processor 710 and/or its at least one processing core may be considered to be configured to perform said certain actions. Memory 720 may be at least in part comprised in processor 710. Memory 720 may be at least in part external to device 700 but accessible to device 700.

Device 700 may comprise a transmitter 730. Device 700 may comprise a receiver 740. Transmitter 730 and receiver 740 may be configured to transmit and receive, respectively, information in accordance with at least one cellular or non-cellular standard. Transmitter 730 may comprise more than one transmitter. Receiver 740 may comprise more than one receiver. Transmitter 730 and/or receiver 740 may be configured to operate in accordance with Global System for Mobile communication, GSM, Wideband Code Division Multiple Access, WCDMA, Long Term Evolution, LTE, and/or 5G/NR standards, for example.

Device 700 may comprise a Near-Field Communication, NFC, transceiver 750. NFC transceiver 750 may support at least one NFC technology, such as Bluetooth, Wibree or similar technologies.

Device 700 may comprise User Interface, UI, 760. UI 760 may comprise at least one of a display, a keyboard, a touchscreen, a vibrator arranged to signal to a user by causing device 700 to vibrate, a speaker and a microphone. A user may be able to operate device 700 via UI 760, for example to accept incoming telephone calls, to originate telephone calls or video calls, to browse the Internet, to manage digital files stored in memory 720 or on a cloud accessible via transmitter 730 and receiver 740, or via NFC transceiver 750, and/or to play games.

Device 700 may comprise or be arranged to accept a user identity module 770. User identity module 770 may comprise, for example, a Subscriber Identity Module, SIM, card installable in device 700. A user identity module 770 may comprise information identifying a subscription of a user of device 700. A user identity module 770 may comprise cryptographic information usable to verify the identity of a user of device 700 and/or to facilitate encryption of communicated information and billing of the user of device 700 for communication effected via device 700.

Processor 710 may be furnished with a transmitter arranged to output information from processor 710, via electrical leads internal to device 700, to other devices comprised in device 700. Such a transmitter may comprise a serial bus transmitter arranged to, for example, output information via at least one electrical lead to memory 720 for storage therein. Alternatively to a serial bus, the transmitter may comprise a parallel bus transmitter. Likewise processor 710 may comprise a receiver arranged to receive information in processor 710, via electrical leads internal to device 700, from other devices comprised in device 700. Such a receiver may comprise a serial bus receiver arranged to, for example, receive information via at least one electrical lead from receiver 740 for processing in processor 710. Alternatively to a serial bus, the receiver may comprise a parallel bus receiver.

Device 700 may comprise further devices not illustrated in FIG. 6. For example, where device 700 comprises a smartphone, it may comprise at least one digital camera. Some devices 700 may comprise a back-facing camera and a front-facing camera, wherein the back-facing camera may be intended for digital photography and the front-facing camera for video telephony. Device 700 may comprise a fingerprint sensor arranged to authenticate, at least in part, a user of device 700. In some example embodiments, device 700 lacks at least one device described above. For example, some devices 700 may lack a NFC transceiver 750 and/or user identity module 770.

Processor 710, memory 720, transmitter 730, receiver 740, NFC transceiver 750, UI 760 and/or user identity module 770 may be interconnected by electrical leads internal to device 700 in a multitude of different ways. For example, each of the aforementioned devices may be separately connected to a master bus internal to device 700, to allow for the devices to exchange information. However, as the skilled person will appreciate, this is only one example and depending on the example embodiment, various ways of interconnecting at least two of the aforementioned devices may be selected without departing from the scope of the example embodiments.

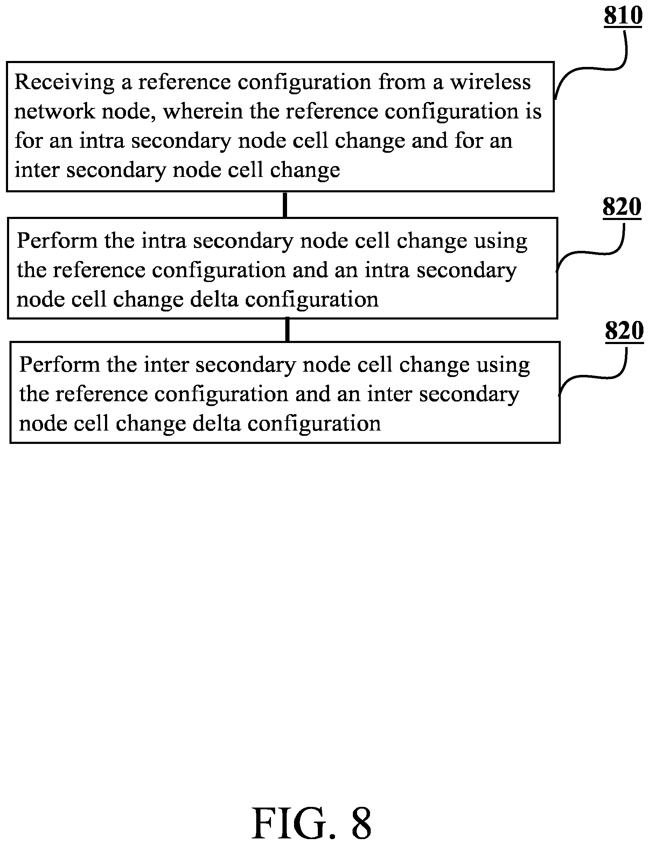

FIG. 8 is a flow graph of a first method in accordance with at least some example embodiments. The first method may be performed by UE 110, or by a control device configured to control the functioning thereof, possibly when installed therein.

The first method may comprise, at step 710, receiving a reference configuration from a wireless network node, wherein the reference configuration is for an intra secondary node cell change and for an inter secondary node cell change. The first method may further comprise, at step 720, performing the intra secondary node cell change using the reference configuration and an intra secondary node cell change delta configuration. Finally, the first method may comprise, at step 730, performing the inter secondary node cell change using the reference configuration and an inter secondary node cell change delta configuration.

It is to be understood that the example embodiments disclosed are not limited to the particular structures, process steps, or materials disclosed herein, but are extended to equivalents thereof as would be recognized by those ordinarily skilled in the relevant arts. It should also be understood that terminology employed herein is used for the purpose of describing particular example embodiments only and is not intended to be limiting.

Reference throughout this specification to one example embodiment or an example embodiment means that a particular feature, structure, or characteristic described in connection with the example embodiment is included in at least one example embodiment. Thus, appearances of the phrases "in one example embodiment" or "in an example embodiment" in various places throughout this specification are not necessarily all referring to the same example embodiment. Where reference is made to a numerical value using a term such as, for example, about or substantially, the exact numerical value is also disclosed.

As used herein, a plurality of items, structural elements, compositional elements, and/or materials may be presented in a common list for convenience. However, these lists should be construed as though each member of the list is individually identified as a separate and unique member. Thus, no individual member of such list should be construed as a de facto equivalent of any other member of the same list solely based on their presentation in a common group without indications to the contrary. In addition, various example embodiments and examples may be referred to herein along with alternatives for the various components thereof. It is understood that such example embodiments, examples, and alternatives are not to be construed as de facto equivalents of one another, but are to be considered as separate and autonomous representations.

In an example embodiment, an apparatus, such as, for example, UE 110 or a wireless network node, like MN 120 or S-SN 122, may comprise means for carrying out the example embodiments described above and any combination thereof.

In an example embodiment, a computer program may be configured to cause a method in accordance with the example embodiments described above and any combination thereof. In an example embodiment, a computer program product, embodied on a non-transitory computer readable medium, may be configured to control a processor to perform a process comprising the example embodiments described above and any combination thereof.

In an example embodiment, an apparatus, such as, for example, UE 110 or a wireless network node, like MN 120 or S-SN 122, may comprise at least one processor and at least one memory storing instructions that, when executed by the at least one processor, cause the apparatus at least to perform the example embodiments described above and any combination thereof.

Furthermore, the described features, structures, or characteristics may be combined in any suitable manner in one or more example embodiments. In the preceding description, numerous specific details are provided, such as examples of lengths, widths, shapes, etc., to provide a thorough understanding of example embodiments of the disclosure. One skilled in the relevant art will recognize, however, that the disclosure can be practiced without one or more of the specific details, or with other methods, components, materials, etc. In other instances, well-known structures, materials, or operations are not shown or described in detail to avoid obscuring aspects of the disclosure.

While the forgoing examples are illustrative of the principles of the example embodiments in one or more particular applications, it will be apparent to those of ordinary skill in the art that numerous modifications in form, usage and details of implementation can be made without the exercise of inventive faculty, and without departing from the principles and concepts of the disclosure. Accordingly, it is not intended that the disclosure be limited, except as by the claims set forth below.

The verbs "to comprise" and "to include" are used in this document as open limitations that neither exclude nor require the existence of also un-recited features. The features recited in depending claims are mutually freely combinable unless otherwise explicitly stated. Furthermore, it is to be understood that the use of "a" or "an", that is, a singular form, throughout this document does not exclude a plurality.

### INDUSTRIAL APPLICABILITY

At least some example embodiments find industrial application in cellular communication networks, for example in 3GPP networks.

### ACRONYMS LIST

- 3GPP: 3rd Generation Partnership Project
- CPC: Conditional PSCell Change
- FR: Frequency Range
- GSM: Global System for Mobile communication
- LTE: Long-Term Evolution
- M2M: Machine-to-Machine
- MCG: Master Cell Group
- MN: Master Node
- MR-DC: Multi-RAT - Dual Connectivity
- NFC: Near-Field Communication
- PSCell: Primary Secondary Cell
- RAT: Radio Access Technology
- RRC: Radio Resource Control
- SAPC: Selective Activation of PSCell Change
- SCG: Secondary Cell Group
- SN: Secondary Node
- SRB: Signaling Radio Bearer
- S-SN: Source SN
- T-SN: Target SN
- UE: User Equipment
- UL: Uplink
- UI: User Interface
- WCDMA: Wideband Code Division Multiple Access
- WiMAX: Worldwide Interoperability for Microwave Access
- WLAN: Wireless Local Area Network

**REFERENCE SIGNS LIST**

| | |
|---|---|
| 110 | UE |
| 115 | Air interface |
| 120 | MN |
| 122 | S-SN |
| 124 | T-SN |
| 125, 135 | Wired interfaces |
| 126 | Other T-SNs |
| 130 | Core Network |
| 202 - 222 | Steps in FIG. 2 |
| 302 - 322 | Steps in FIG. 3 |
| 402 - 430 | Steps in FIG. 4 |
| 502 - 524 | Steps in FIG. 5 |
| 602 - 624 | Steps in FIG. 6 |
| 700 - 770 | Structure of the apparatus of FIG. 7 |
| 810-830 | Phases of the first method in FIG. 8 |

## Claims

1. An apparatus comprising:
at least one processor; and
at least one memory storing instructions that, when executed by the at least one processor,
cause the apparatus at least to:
- receive a reference configuration from a wireless network node, wherein the reference configuration is for an intra secondary node cell change and for an inter secondary node cell change;
- perform the intra secondary node cell change using the reference configuration and an intra secondary node cell change delta configuration; and
- perform the inter secondary node cell change using the reference configuration and an inter secondary node cell change delta configuration.

2. The apparatus according to claim 1, wherein the stored instructions further cause, when executed by the at least one processor, the apparatus at least to:
- receive an indication from the wireless network node or another wireless network node, the indication indicating that the reference configuration is for the intra secondary node cell change and for the inter secondary node cell change.

3. The apparatus according to claim 2, wherein the wireless network node is a source secondary node, wherein the reference configuration is for the intra secondary node cell change, and wherein the indication is received from said another wireless network node that is a master node, and the stored instructions further cause, when executed by the at least one processor, the apparatus at least to:
- perform, on the basis of the indication, the inter secondary node cell change after performing the intra secondary node cell change and by using the reference configuration for the intra secondary node cell change.

4. The apparatus according to claim 3, wherein the stored instructions further cause, when executed by the at least one processor, the apparatus at least to:
- receive, from a master node, the inter secondary node cell change delta configuration and an indication indicating that the reference configuration is to be used for the inter secondary node cell change; and
- perform the inter secondary node cell change using the reference configuration and the inter secondary node cell change delta configuration.

5. The apparatus according to claim 3, wherein the stored instructions further cause, when executed by the at least one processor, the apparatus at least to:
- receive, from a master node, an updated intra secondary node cell change delta configuration and an updated reference configuration; and
- perform the inter secondary node cell change using the updated reference configuration and the inter secondary node cell change delta configuration.

6. The apparatus according to claim 2, wherein the wireless network node is a master node, and wherein the reference configuration is for the inter secondary node cell change the stored instructions further cause, when executed by the at least one processor, the apparatus at least to:
- receive, from the master node an indication indicating that the reference configuration is also for the intra secondary node cell change; and
- perform, using the reference configuration on the basis of the indication, the intra secondary node cell change after performing the inter secondary node cell change.

7. The apparatus according to claim 6, wherein the stored instructions further cause, when executed by the at least one processor, the apparatus at least to:
- receive, from a source secondary node, the intra secondary node cell change delta configuration and an indication indicating that the reference configuration is to be used for the intra secondary node cell change; and
- perform the intra secondary node cell change using the reference configuration and the intra secondary node cell change delta configuration.

8. The apparatus according to claim 1 or claim 2, wherein the reference configuration comprises a part for the intra secondary node cell change and another part for the inter secondary node cell change.

9. An apparatus comprising:
at least one processor; and
at least one memory storing instructions that, when executed by the at least one processor,
cause the apparatus at least to:
- determine a reference configuration for a user equipment, wherein the reference configuration is for an intra secondary node cell change and for an inter secondary cell change; and
- transmit the reference configuration to the user equipment.

10. The apparatus according to claim 9, wherein the stored instructions further cause, when executed by the at least one processor, the apparatus at least to:
- transmit an indication to the user equipment, the indication indicating that the reference configuration is for the intra secondary node cell change and for the inter secondary node cell change.

11. The apparatus according to claim 9 or claim 10, wherein the apparatus is a master node and the stored instructions further cause, when executed by the at least one processor, the apparatus at least to:
- transmit, to the user equipment, the inter secondary node cell change delta configuration and an indication indicating that the reference configuration is to be used for the inter secondary node cell change; and
- receive, from the user equipment, a radio resource control reconfiguration complete message associated with the inter secondary node cell change.

12. The apparatus according to any of claims 9 to 11, wherein the apparatus is a master node and the stored instructions further cause, when executed by the at least one processor, the apparatus at least to:
- receive, from a source secondary node, the reference configuration;
- determine to initiate the inter secondary node cell change; and
- transmit the reference configuration to a target secondary node, wherein the target secondary node is a target node for the inter secondary node cell change.

13. The apparatus according to claim 9 or claim 10, wherein the apparatus is a source secondary node and the stored instructions further cause, when executed by the at least one processor, the apparatus at least to:
- prepare the reference configuration;
- transmit, to a master node, the reference configuration;
- receive, from the master node, a modified reference configuration;
- determine an updated reference configuration and an updated intra secondary node cell change delta configuration according to the modified reference configuration; and
- transmit, to the master node, the updated intra secondary node cell change delta configuration and the updated reference configuration.

14. The apparatus according to claim 9 or claim 10, wherein the apparatus is a master node and the stored instructions further cause, when executed by the at least one processor, the apparatus at least to:
- receive, from a source secondary node, the reference configuration;
- transmit, to the source secondary node, a modified reference configuration;
- receive, from the source secondary node, an updated intra secondary node cell change delta configuration and an update reference configuration; and
- transmit, to the user equipment, the updated intra secondary node cell change delta configuration and the updated reference configuration.

15. The apparatus according to claim 9 or claim 10, wherein the apparatus is a source secondary node and the stored instructions further cause, when executed by the at least one processor, the apparatus at least to:
- transmit, to the user equipment, the intra secondary node cell change delta configuration and an indication indicating that the reference configuration is to be used for the intra secondary node cell change; and
- receive, from the user equipment, a radio resource control reconfiguration complete message associated with the intra secondary node cell change.

16. A method, comprising:
- receiving, by an apparatus, a reference configuration from a wireless network node, wherein the reference configuration is for an intra secondary node cell change and for an inter secondary node cell change;
- performing, by the apparatus, the intra secondary node cell change using the reference configuration and an intra secondary node cell change delta configuration; and
- performing, by the apparatus, the inter secondary node cell change using the reference configuration and an inter secondary node cell change delta configuration.

17. A method, comprising:
- determining, by an apparatus, a reference configuration for a user equipment, wherein the reference configuration is for an intra secondary node cell change and for an inter secondary cell change; and
- transmitting, by the apparatus, the reference configuration to the user equipment.
